# EUROPÄISCHE PATENTSCHRIFT

(11) **EP 2 195 616 B1**
(45) Veröffentlichungstag und Bekanntmachung des Hinweises auf die Patenterteilung: **15.11.2017**
(21) Anmeldenummer: 08804735.2
(22) Anmeldetag: 25.09.2008
(51) Int. Cl.: G01D 5/245, G01D 5/14, G01D 3/08, G01P 1/12, G07C 7/00

(54) **IMPULSGEBER FÜR EINE VORRICHTUNG, INSBESONDERE FÜR EINEN TACHOGRAPHEN, UND VERFAHREN ZUM BETREIBEN DES IMPULSGEBERS**
PULSE GENERATOR FOR A DEVICE, IN PARTICULAR FOR A TACHOGRAPH AND METHOD FOR OPERATING SAID PULSE GENERATOR
GÉNÉRATEUR D'IMPULSIONS POUR UN DISPOSITIF, NOTAMMENT POUR UN TACHYGRAPHE, ET PROCÉDÉ DE FONCTIONNEMENT D'UN GÉNÉRATEUR D'IMPULSIONS

(30) Priorität: 28.09.2007 DE 102007046942
(43) Veröffentlichungstag der Anmeldung: 16.06.2010
(73) Patentinhaber: Continental Automotive GmbH, 30165 Hannover (DE)
(72) Erfinder: PLANKENHORN, Horst, 78048 Villingen-Schwenningen (DE)
(86) Internationale Anmeldenummer: PCT/EP2008/062838
(87) Internationale Veröffentlichungsnummer: WO 2009/043792

(56) Entgegenhaltungen:
- EP-A- 0 750 178
- DE-A1- 10 054 530
- DE-A1- 19 722 549
- DE-A1-102005 039 280

## Beschreibung

Die Erfindung betrifft einen Impulsgeber für eine Vorrichtung, insbesondere einen Tachographen oder Fahrtschreiber, gemäß dem Oberbegriff des Anspruchs 1.

Außerdem betrifft die Erfindung eine mit einem solchen Impulsgeber ausgestattete Vorrichtung sowie ein Verfahren zum Betreiben eines solchen Impulsgebers.

Im Automotive Bereich werden Tachographen oder Fahrtschreiber hergestellt, die in Fahrzeugen zum Einsatz kommen, um die Fahrgeschwindigkeit bzw. die zurückgelegte Wegstrecke sowie weitere Daten, wie etwa Fahr- und Haltezeiten, zu erfassen. Um insbesondere die Fahrgeschwindigkeit bzw. zurückgelegte Wegstrecke zu erfassen, werden Impulsgeber eingesetzt, die in dem Fahrzeug eingebaut sind und vorzugsweise am Getriebeausgang bzw. -abgang angeordnet sind, um mechanische Umdrehungen des Geberrades bzw. Taktrades, wie z. B. eines Tachometerritzels oder ähnlichen Elementes, zu erfassen. Die bekannten Impulsgeber weisen einen Sensorkopf auf, der mindestens einen Sensor umfasst, welcher mechanische Umdrehungen detektiert und ein dazu korrespondierendes Sensorsignal erzeugt. Das Sensorsignal wird häufig in Form von Impulsen mittels eines elektro-optischen oder elektro-magnetischen Bauelementes erzeugt. Häufig wird ein so genannter Hall-Sensor eingesetzt, der die Umdrehung eines mit ferro-magnetischen Zähnen besetzten Geberrades bzw. Taktrades, das mit dem Tachometerritzel verbunden ist, erfasst, und in entsprechende elektronische Impulse umwandelt. Die Anzahl der erzeugten Impulse verhält sich dabei proportional zu der zurückgelegten Fahrtstrecke. Aus der Impulszahl pro Zeiteinheit kann direkt die aktuelle Fahrgeschwindigkeit ermittelt werden.

Allgemein gesagt, werden die Impulsgeber also zur Betriebsdatenerfassung in Kraftfahrzeugen eingesetzt.

Insbesondere im Bereich der Betriebsdatenaufzeichnung in Nutzfahrzeugen sind Manipulationen von Tachographen und/oder Impulsgebern aufgrund des Urkundencharakters der Aufzeichnungen unbedingt zu vermeiden. Es hat sich gezeigt, dass Impulsgeber für Tachographen sich durch äußere Beeinflussung des Sensorkopfes insbesondere bei Verwendung von einem Hall-Sensor missbräuchlich manipulieren lassen. Dazu werden die mit dem Getriebe verplombten Impulsgeber ausgebaut und über eine steuerbare elektrische Spule mit magnetischen Wechselfeldern beaufschlagt. Dies führt zu einer Irritation des Hall-Sensors und somit zu einer verfälschten Abgabe von Sensorsignalen. Eine andere Art der Manipulation ist die Überlagerung des zur Pulserzeugung notwendigen Magnetfeldes am Hall-Sensor selbst. Dazu wird das Permanent-Magnetfeld mit einem starken Störfeld beaufschlagt, sodass der Hall-Sensor außerhalb seines Arbeitspunktes gebracht wird, was wiederum eine korrekte Detektion der mechanischen Umdrehungen unmöglich macht.

In ähnlicher Art und Weise können auch die mit optischen Sensoren bestückten Impulsgeber missbräuchlich manipuliert werden.

Um solchen Manipulationen entgegenzutreten, wird beispielsweise in der WO 2006/027297 A1, ein Verfahren zur Manipulationserkennung an einem Impuls gebenden Sensor vorgeschlagen. Dazu übermittelt der Sensor an eine Aufzeichnungseinheit Echtzeitimpulse einer Messung sowie auf einen ersten Anforderungsbefehl hin ein erstes Datensignal, welches Informationen über zwischenzeitliche Echtzeitimpulse enthält, wobei ein Datensignal-Auswertungsmodul, basierend auf dem Datensignal, die Anzahl der Impulse zu einer Datensignalimpulszahl ermittelt, wobei aufgrund eines zweiten Anforderungsbefehls an das Datensignal-Auswertungsmodul eine Echtzeitimpulsanzahl übermittelt, welche der Aufsummierung der Echtzeitimpulse entspricht, und wobei der erste Anforderungsbefehl und der zweite Anforderungsbefehl um eine bestimmte Zeitspanne zueinander versetzt sind, und ein Vergleich der Echtzeit-Impulsanzahl mit der Datensignalimpulsanzahl erfolgt. Somit vergleicht das dort vorgeschlagene Verfahren den Unterschied der Echtzeit-Impulsanzahl der aktuellen Anforderungen zu derjenigen der vorhergehenden Anforderung mit der Anzahl der Impulse, welche die Datensignalauswertung aus den zyklisch übermittelten Datensignalen für den gleichen Zeitraum ermittelt hat. Dieses Verfahren erfordert also eine gewisse Interkommunikation zwischen der Datensignalverarbeitungs- und Auswerteeinheit und dem Sensor. Es kann aber auf die bereits bekannten Impulsgeber sehr gut angewendet werden, um insbesondere Manipulationen an der Übertragung eines zu der Wegstrecke bzw. der Geschwindigkeit korrelierten Signals von einem Impuls gebenden Sensor zu einer Aufzeichnungseinheit zu erschweren.

Die DE 10 2005 039 280 A1, DE 197 22 549 A1 und die DE 100 54 530 A1 offenbaren aus dem Stand der Technik bekannte Winkelsensoren und/oder Drehgeber.

Die hier vorgeschlagene Erfindung stellt sich die Aufgabe, auch Maßnahmen am Sensorkopf des Impulsgebers selbst vorzunehmen, und Manipulationen der eingangs genannten Art in erhöhtem Masse zu erschweren.

Zur Lösung der Aufgabe schlägt die Erfindung einen Impulsgeber mit den Merkmalen nach Anspruch 1 vor.

Außerdem werden eine mit dem Impulsgeber versehene Vorrichtung zur Betriebsdatenerfassung in einem Fahrzeug, insbesondere ein Tachograph oder Fahrtschreiber, vorgeschlagen sowie ein Verfahren zum Betreiben des Impulsgebers.

Der hier vorgeschlagene Impulsgeber zeichnet sich insbesondere dadurch aus, dass der Sensorkopf mehrere, voneinander räumlich beabstandet bzw. räumlich entfernt angeordnete Sensoren aufweist, die mehrere zu den detektierten Umdrehungen korrespondierende Sensorsignale erzeugen, wobei eine Auswerteeinheit die mehreren erzeugten Sensorsignale untereinander und/oder mit einem gespeicherten Signalmuster mehr vergleicht. Bei dem erfindungsgemäßen Verfahren werden somit von mehreren, an dem Sensorkopf voneinander räumlich beabstandet angeordneter, Sensoren erzeugte Sensorsignale erfasst und mit einem gespeicherten Signalmuster verglichen.

Der Erfindung liegt der Gedanke zugrunde, dass ein Impulsgeber mit mehreren voneinander räumlich getrennten Einzelsensoren im Sensorkopf versehen wird und die Signale der einzelnen Sensoren durch Vergleich mit einer relativen der absoluten Referenz auf Plausibilität hin geprüft werden. Die Vergleichsoperation betrifft einen Vergleich der mehreren Sensorsignale untereinander (als relative Referenzen) und/oder einen Vergleich mit einem zuvor ermittelten Signalmuster (als absolute Referenz). Somit kann sicher festgestellt werden, ob die von dem Sensorkopf abgegebenen Sensorsignale plausibel sind oder durch Manipulation verfälscht worden sind.

Wenn beispielsweise erkannt wird, dass die erzeugten Sensorsignale einem während bzw. nach der Installation des Impulsgebers eingelernten (trainierten) Signalmuster entsprechen, werden die Sensorsignale als gültig angesehen. Andernfalls wird z. B. über die heute in digitalen Tachographen eingesetzte verschlüsselte Datenübertragung eine Fehlermeldung an den Tachographen übermittelt, wodurch dann eine Manipulation zur Anzeige gebracht werden kann.

Der in dem erfindungsgemäßen Impulsgeber eingesetzte Sensorkopf besteht aus mindestens zwei, vorzugsweise drei oder mehr, einzelnen Sensoren. Diese sind vorzugsweise in Form eines ASIC integriert und direkt mit der intelligenten Signalverarbeitungs- bzw. Auswertungseinheit auf einem Chip integriert.

Das zur Impulsdetektion erforderliche Magnetfeld wird vorzugsweise durch einen sogenannten Back-Bias-Magneten erzeugt, d. h. durch einen hinter dem Chip fixierten Magneten. Dieser versorgt die auf dem Chip befindlichen Sensoren mit einem magnetischen Offset. Dieser Offset wird dann beim Vorbeiziehen eines ferro-magnetischen Geberrades bzw. Takt- oder Zahnrades von einem Detektorsignal überlagert, das eine bestimmte Form und Phasenlage aufgrund der Konstellation der einzelnen Sensoren aufweist. Es entsteht also ein aus mehreren Sensorsignalen bestehendes eindeutiges Signalmuster.

Beim Versuch einer Manipulation des Impulsgebers durch äußere Magnetfelder werden die erzeugten Sensorsignale, insbesondere ihr Amplitudenhub sowie ihre Phasenlage, derart stark verfälscht, dass sie nicht mehr mit dem zuvor eingelernten Signalmuster übereinstimmen. Somit wird eine Manipulation schnell und sicher erkannt und kann angezeigt werden.

Die Erfindung kann auch diskret oder hybrid mit Bauteilen bzw. Chips in Dünn- oder Dickschicht-Technik auf den heute in der Fahrzeugtechnik üblichen Substraten aufgebaut werden.

Eine mit einem erfindungsgemäßen Impulsgeber versehene Anordnung kann sogar die Manipulation mittels Stimulation des Sensorkopfes mit einem künstlich erzeugten Magnetfeld sicher erkennen. Die räumlich getrennte Anordnung der einzelnen Sensoren gewährleistet eine sichere Abgrenzung eines durch einen vorbeiziehenden Taktrad bzw. -zahnes geänderten Magnetfeldes von einem stimulierten Magnetfeld. Ein Manipulationsversuch wird somit massiv erschwert, da es nahezu unmöglich ist, ein dreidimensionales Magnetfeld mit entsprechender Änderung zu erzeugen, insbesondere weil dieses noch zeitlich korreliert mit den tatsächlich erfassten Magnetfeld werden müsste. Erschwerend kommen noch die jeweiligen Fahrzeugbedingungen hinzu. Somit wird durch die Erfindung jeder Manipulationsversuch systematisch ausgeschlossen.

Solch eine Sicherheit können die herkömmlichen Impulsgeber nicht leisten, da sie nur über einen Sensor verfügen. So ist, insbesondere bei einem Hall-Sensor zu beachten, dass er entweder eine festgelegte Schaltschwelle hat oder dass bei Inbetriebnahme des Sensors die Schaltschwelle abgespeichert wird, so dass sich überlagernde statische Fremdfelder bzw. Störfelder nicht mehr ausgeblendet werden können. Eine Manipulation mit geeignet gesteuerten Magnetfeldern können die herkömmlichen Impulsgeber bzw. -Systeme daher prinzipbedingt nicht leicht erkennen. Auch dieses Problem wird durch die erfindungsgemäße Lösung in vorteilhafter Weise überwunden.

Die vorliegende Erfindung und die sich daraus ergebenden Vorteile werden nun näher anhand von Ausführungsbeispielen beschrieben, wobei auf die beiliegenden Zeichnungen Bezug genommen wird, die folgendes darstellen:
- Fig. 1: zeigt in Frontansicht sowie in Seitenansicht den Aufbau eines Sensorkopfes eines erfindungsgemäßen Impulsgebers;
- Fig. 2: zeigt in zeitlicher Abfolge die sich ändernde Orientierung des Sensorkopfes zu einem ferro-magnetischen Zahn und die sich daraus ergebende zeitliche Abfolge der Sensorsignale;
- Fig. 3: zeigt den erfindungsgemäßen Impulsgeber mit Sensorkopf und Auswerteeinheit in einer Positionierung gegenüber einem mit Zähnen versehenen Taktrad;
- Fig. 4: zeigt den zeitlichen Signalverlauf der erzeugten Sensorsignale und das sich daraus ergebende Signalmuster.

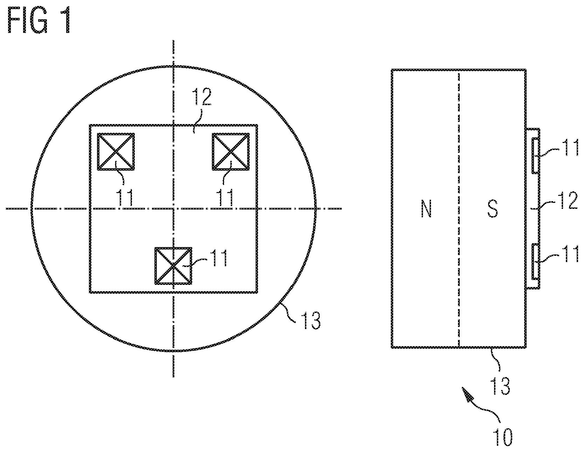

Die Fig. 1 zeigt in einer Frontansicht sowie in einer Seitenansicht den prinzipiellen Aufbau eines Sensorkopfes 10, der in dem erfindungsgemäßen Impulsgeber zum Einsatz kommt. Der Sensorkopf 10 hat beispielsweise drei voneinander räumlich beabstandet angeordnete Sensoren 11, die vorzugsweise auf einem Substrat 12 aufgebracht sind. Auf der Rückseite oder in der Nähe des Substrates 12 befindet sich ein Permanent-Magnet 13, der als so genannter Back-Bias-Magnet ausgebildet ist, und ein Magnetfeld erzeugt, das die als Hall-Sensoren ausgebildeten Sensoren 11 senkrecht durchdringt. Somit entsteht in jedem der Hall-Sensoren 11 ein magnetischer Offset, dem sich beim Vorbeiziehen eines ferro-magnetischen Takt- oder Zahnrades ein Nutzsignal überlagert. Aufgrund des Hall-Effektes erzeugt der jeweilige Sensor 11 ein eigenes Sensorsignal.

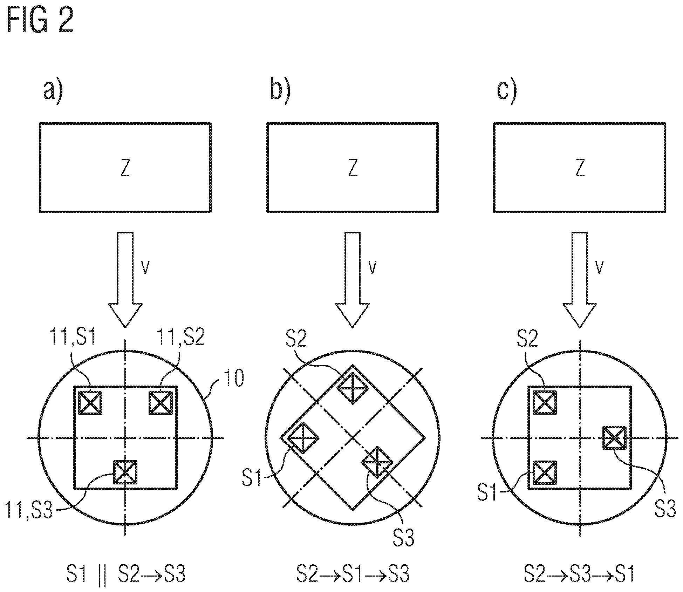

Die Signalerzeugung wird anhand der Fig. 2 näher erläutert, welche die Situation in drei Momentaufnahmen a), b) und c) wiedergibt, um die sich zeitlich ändernde Orientierung des Sensorkopfes 10 zu dem jeweils vorbeiziehenden Taktrad-Zahn Z zu verdeutlichen.

Aufgrund des Hall-Effektes wird in jedem Sensor 11 ein zur Geschwindigkeit des vorbeiziehenden Zahnes Z proportionaler Spannungspuls erzeugt. In der ersten dargestellten Situation a) ist der Sensorkopf 10 derart orientiert, dass in zwei der drei Sensoren, nämlich in S1 und S2 gleichzeitig ein Impuls erzeugt wird und in dem dritten Sensor S3 später ein Impuls erzeugt wird. Die Sensorsignale werden also in entsprechender zeitlicher Abfolge "S1 mit S2 und dann S3" erzeugt, was bedeutet, dass die Sensorsignale S1 und S2 zeitgleich erzeugt werden und danach erst das Sensorsignal S3 erzeugt wird. Die räumliche Orientierung des Sensorkopfes 10 gibt also ein entsprechendes Signalmuster "S1||S2 -> S3" wieder.

In der zweiten Situation b) ist der Sensorkopf 10 in einer leicht verdrehten Orientierung angeordnet, so dass die Sensorsignale jeweils zu einem anderen Zeitpunkt erzeugt werden, nämlich in der zeitlichen Abfolge S2, dann S1, und danach S3. Das sich daraus ergebende Signalmuster besteht also aus drei zueinander phasenverschobenen Sensorsignalen und stellt sich wie folgt dar: "S2 -> S1 -> S3".

Die dritte Anordnung c in Fig. 2 erzeugt eine andere Abfolge, nämlich: Zuerst S2, dann S3, dann S1. Auch hier entsteht ein Signalmuster, nämlich "S2 -> S3 -> S1".

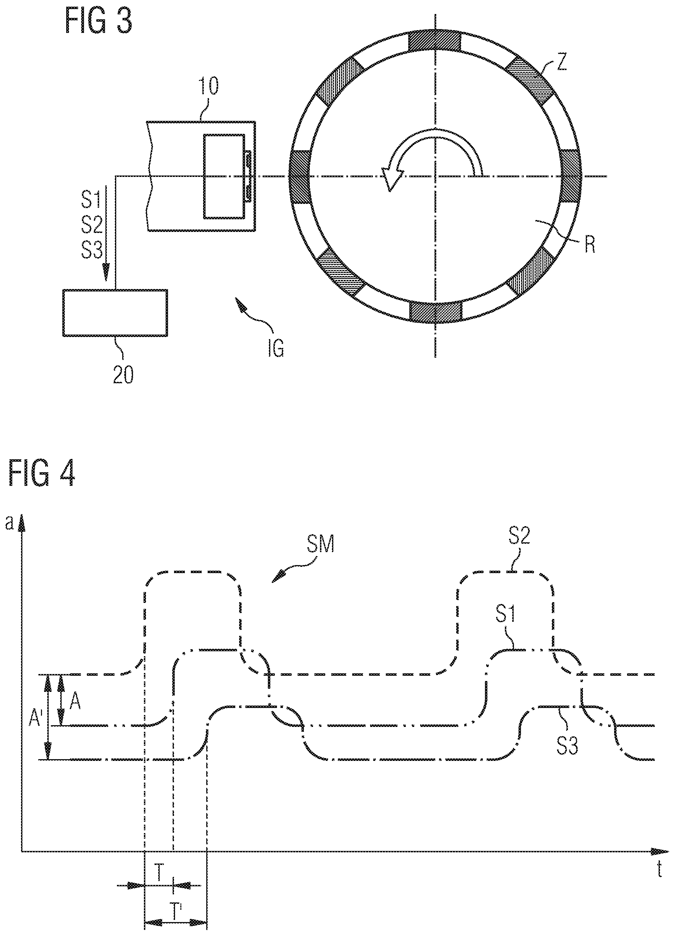

Durch die jeweilige Orientierung des Sensorkopfes 10 ergibt sich jeweils ein bestimmtes Signalmuster. Die Signalmuster unterscheiden sich zumindest durch verschiedene Phasen- bzw. Zeit-Offsets. Sie können sich auch noch im Amplitudenhub unterscheiden, so dass das jeweilige Signalmuster sowohl durch die Phasen wie auch durch die Amplituden der Sensorsignale S1, S2 und S3 geprägt ist. Das sich jeweils einstellende Signalmuster (siehe z. B. das in Fig. 4 dargestellte Muster) kann bei Installation des Impulsgebers abgespeichert werden, um später mit den im Fahrbetrieb erfassten Sensorsignalen verglichen zu werden.

Die Fig. 3 zeigt die Anordnung eines Impulsgebers IG, der einen solchen Sensorkopf 10, sowie eine damit verbundene Auswerteeinheit 20 umfasst, wobei der Sensorkopf 10 auf die ferro-magnetischen Zähne Z eines Geber- bzw. Taktrades R hin ausgerichtet ist. Bei Drehung des Taktrades R werden im Sensorkopf 10 drei verschiedene Sensorsignale S1, S2 und S3 erzeugt und in der Auswerteeinheit 20 verglichen.

Wie die Fig. 4 zeigt, ergibt sich ein durch die Sensorsignale S1, S2, und S3 geprägtes eindeutiges Signalmuster SM. In diesem Beispiel werden die Sensorsignale in der Abfolge S2, dann S1 und dann S3 erzeugt. Der relative Phasenoffset T zwischen den Sensorsignalen S2 und S1 hat dabei einen bestimmten Wert, z. B. 95°. Der Phasenoffset T' zwischen den Sensorsignalen S2 und S3 ist größer und beträgt beispielsweise 240°.

Ebenso unterscheiden sich die erzeugten Sensorsignale in ihrem jeweiligen Amplitudenhub bzw. in ihrer Signalamplitude A: Das Sensorsignal S2 weist beispielsweise die größte Amplitude auf, wohingegen das Sensorsignal S3 die geringste Amplitude aufweist. Der Amplitudenhub A zwischen dem Sensorsignal S2 und dem Sensorsignal S1 ist geringer als der Amplitudenhub A' zwischen dem Sensorsignal S2 und dem Sensorsignal S3. Auch durch diese Charakteristik wird das eindeutige Signalmuster SM geprägt. Das in der Figur 4 dargestellte Signalmuster SM kann beispielsweise durch die in Fig. 2b gestellte Anordnung erzeugt werden.

Es stehen also immer mehrere Sensorsignale zur Verfügung, die direkt untereinander verglichen werden können oder die auch als Gruppe mit einem vorher abgespeicherten Signalmuster verglichen werden können, um die Plausibilität der Sensorsignale zu prüfen.

Beispielsweise wird das in Fig. 4 dargestellte Signalmuster SM in der Auswerteeinheit 20 abgespeichert und für einen späteren Vergleich herangezogen. Werden dann später im Fahrbetrieb Sensorsignale S1 bis S3 erzeugt, so kann bei einem störungsfreien bzw. manipulationsfreien Betrieb davon ausgegangen werden, dass die erfassten Sensorsignale dem gespeicherten Signalmuster SM entsprechen. Stellt die Auswerteeinheit 20 gewisse Abweichungen fest, die insbesondere außerhalb einer vorgebaren Toleranz liegen, so wird ein Warnsignal an den Tachographen ausgegeben, das eine Manipulation anzeigt.

Somit wird durch die Erfindung sichergestellt, dass jeder Manipulationsversuch sofort und sicher erkannt wird. Es kann sogar ausreichen, nur jeweils zwei einzelne der erzeugten Sensorsignale untereinander zu vergleichen, um festzustellen, ob eine Manipulation vorliegt oder nicht.

In der hier anhand der Fig. 2b und Fig. 4 dargestellten zeitlichen Abfolge der Sensorsignale ist zu erwarten, dass im störungsfreien Betrieb die Sensorsignale in der Abfolge: "S2 -> S1 -> S3" erzeugt werden. Würde nun in der Auswerteeinheit 20 festgestellt, dass beispielsweise das Sensorsignal S3 vor dem Sensorsignal S1 erscheint, wäre dies ein Anzeichen für eine Manipulation. Dies würde dann automatisch detektiert und angezeigt werden.

Das Ausführungsbeispiel der Erfindung bezieht sich insbesondere auf Impulsgeber, die mit Hall-Sensoren ausgestattet sind. In gleicher Weise können aber auch Impulsgeber mit anderen Sensoren, wie etwa magneto-resistiven Sensoren, insbesondere sog. GMR-Sensoren (Giant Magneto-Resistive) oder auch opto-elektrischen Sensoren, ausgebildet werden. Die Erfindung wird vorzugsweise bei Tachographen bzw. Fahrtschreibern eingesetzt, kann aber auch bei anderen Arten von elektronischen Messsystemen, insbesondere für die Betriebsdatenerfassung in einem Fahrzeug, zum Einsatz kommen.

## Patentansprüche

1. Impulsgeber (IG) für eine Vorrichtung zur Betriebsdatenerfassung in einem Fahrzeug, insbesondere für einen Tachographen oder Fahrtschreiber, mit einem Sensorkopf (10) und einer Auswerteeinheit (20), wobei der Sensorkopf (10) mehrere voneinander räumlich beabstandet angeordnete Sensoren (11) aufweist, die mechanische Umdrehungen detektieren und mehrere zu den detektierten Umdrehungen korrespondierende Sensorsignale (S1, S2, S3) erzeugen, **dadurch gekennzeichnet, dass** die Auswerteeinheit (20) dazu ausgelegt ist, die mehreren erzeugten Sensorsignale (S1, S2, S3) mit einem gespeicherten Signalmuster (SM) zu vergleichen und eine Abweichung von dem gespeicherten Signalmuster (SM) außerhalb einer vorgebbaren Toleranz durch ein Warnsignal anzeigen zu können.

2. Impulsgeber (IG) nach Anspruch 1, **dadurch gekennzeichnet, dass** die Sensoren als magnetoresistive Sensoren, insbesondere GMR-Sensoren, oder als Hall-Sensoren (S1, S2, S3) ausgebildet sind, die in Nähe eines Permanentmagneten (13) angeordnet sind und die Umdrehungen eines Taktrades (R) detektieren, das hervorstehende Bereiche, insbesondere Zähne (Z), aus ferromagnetischem Material aufweist.

3. Impulsgeber (IG) nach Anspruch 2, **dadurch gekennzeichnet, dass** die Hall-Sensoren (S1, S2, S3) und die Auswerteeinheit (20) in einem Chip, insbesondere ASIC, integriert sind, wobei der Permanentmagnet hinter dem Chip fixiert ist, insbesondere in Form eines Back-Bias-Magneten fixiert ist.

4. Impulsgeber (IG) nach Anspruch 3, **dadurch gekennzeichnet, dass** der Chip auf einem Substrat (12) in Dünn- oder Dickschichttechnik aufgebaut ist.

5. Impulsgeber (IG) nach einem der vorhergehenden Ansprüche, **dadurch gekennzeichnet, dass** die Sensoren (S1, S2, S3) in verschiedenen Abständen zueinander angeordnet sind, insbesondere auf einem Substrat (12) angeordnet sind.

6. Impulsgeber (IG) nach einem der vorhergehenden Ansprüche, **dadurch gekennzeichnet, dass** die Auswerteeinheit (20) dazu ausgelegt ist, die Sensorsignale (S1, S2, S3) untereinander anhand vorgebbarer Signaleigenschaften, insbesondere Amplitudenhub (A, A'), Zeit- bzw. PhasenOffset (T, T') und/oder Signalform, zu vergleichen.

7. Impulsgeber (IG) nach einem der vorhergehenden Ansprüche, **dadurch gekennzeichnet, dass** die Auswerteeinheit (20) dazu ausgelegt ist, eines der Sensorsignale (S1, S2, S3) für eine vorgebbare Zeitspanne zu erfassen und als Signalmuster (SM) für einen Vergleich mit danach erfassten Sensorsignalen zu speichern.

8. Impulsgeber (IG) nach einem der vorhergehenden Ansprüche, **dadurch gekennzeichnet, dass** die Auswerteeinheit (20) dazu ausgelegt ist, bei einer mittels des Vergleichs festgestellten, insbesondere einen Toleranzwert übersteigenden, Abweichung der Sensorsignale (S1, S2, S3) untereinander und von dem Signalmuster (SM) (SM) eine Manipulation des Impulsgebers (IG) anzeigen zu können.

9. Impulsgeber (IG) nach einem der vorhergehenden Ansprüche; **dadurch gekennzeichnet, dass** die mindestens zwei, vorzugsweise drei oder mehr, einzelnen Sensoren (11) in Form eines ASIC integriert und direkt mit der Auswertungseinheit (20) auf einem Chip integriert sind.

10. Vorrichtung zur Betriebsdatenerfassung in einem Fahrzeug, insbesondere Tachograph oder Fahrtschreiber, mit einem Impulsgeber (IG) nach Anspruch 1 mit einem Sensorkopf (10) und einer Auswerteeinheit, wobei der Sensorkopf (11) mehrere voneinander räumlich beabstandet angeordnete Sensoren (11) aufweist, die mechanische Umdrehungen detektieren und mehrere zu den detektierten Umdrehungen korrespondierende Sensorsignale (S1, S2, S3) erzeugen, **dadurch gekennzeichnet, dass** die Auswerteeinheit (20) dazu ausgelegt ist, die mehreren erzeugten Sensorsignale (S1, S2, S3) mit einem gespeicherten Signalmuster (SM) zu vergleichen und eine Abweichung von dem gespeicherten Signalmuster (SM) außerhalb einer vorgebbaren Toleranz durch ein Warnsignal anzeigen zu können.

11. Verfahren zum Betreiben eines Impulsgebers (IG) nach Anspruch 1 mit einem Sensorkopf (10) und einer Auswerteeinheit, wobei von mehreren an dem Sensorkopf (11) voneinander räumlich beabstandet angeordneten Sensoren (11) mechanische Umdrehungen detektiert und mehrere zu den detektieren Umdrehungen korrespondierende Sensorsignale (S1, S2, S3) erfasst werden, d a - **durch gekennzeichnet**, dass die mehreren erzeugten Sensorsignale (S1, S2, S3) mit einem gespeicherten Signalmuster (SM) verglichen werden und eine Abweichung von dem gespeicherten Signalmuster (SM) außerhalb einer vorgebbaren Toleranz durch ein Warnsignal angezeigt wird.

## Claims

1. Pulse generator (IG) for a device for recording operational data in a vehicle, in particular for a tachograph, with a sensor head (10) and an evaluation unit (20), wherein the sensor head (10) comprises a plurality of sensors (11) arranged spatially separated from one another, which detect mechanical rotations and generate a plurality of sensor signals (S1, S2, S3) corresponding to the detected rotations, **characterized in that** the evaluation unit (20) is designed to compare the plurality of generated sensor signals (S1, S2, S3) with a stored signal pattern (SM), and to be able to report, through a warning signal, a deviation from the stored signal pattern (SM) outside a specifiable tolerance.

2. Pulse generator (IG) according to Claim 1, **characterized in that** the sensors are formed as magneto-resistive sensors, in particular GMR sensors, or as Hall sensors (S1, S2, S3), which are arranged in the proximity of a permanent magnet (13) and detect the rotations of a pulse wheel (R) which comprises protruding regions, in particular teeth (Z) of ferromagnetic material.

3. Pulse generator (IG) according to Claim 2, **characterized in that** the Hall sensors (S1, S2, S3) and the evaluation unit (20) are integrated in one chip, in particular an ASIC, wherein the permanent magnet is fixed behind the chip, in particular is fixed in the form of a back-bias magnet.

4. Pulse generator (IG) according to Claim 3, **characterized in that** the chip is constructed on a substrate (12) in thin-film or thick-film technology.

5. Pulse generator (IG) according to one of the previous claims, **characterized in that** the sensors (S1, S2, S3) are arranged at different distances from one another, in particular on a substrate (12).

6. Pulse generator (IG) according to one of the previous claims, **characterized in that** the evaluation unit (20) is designed to compare the sensor signals (S1, S2, S3) to one another with reference to specifiable signal properties, in particular amplitude swing (A, A'), time offset or phase offset (T, T') and/or signal shape.

7. Pulse generator (IG) according to one of the previous claims, **characterized in that** the evaluation unit (20) is designed to record one of the sensor signals (S1, S2, S3) for a specifiable period of time, and to save it as a signal pattern (SM) for a comparison with sensor signals recorded later.

8. Pulse generator (IG) according to one of the previous claims, **characterized in that** the evaluation unit (20) is designed, in the presence of a deviation of the sensor signals (S1, S2, S3) from one another and from the signal pattern (SM) determined by means of the comparison, and in particular exceeding a tolerance value, to be able to report a manipulation of the pulse generator (IG).

9. Pulse generator (IG) according to one of the previous claims, **characterized in that** the at least two, preferably three or more, individual sensors (11) are integrated in the form of an ASIC, and are integrated directly with the evaluation unit (20) on one chip.

10. Device for recording operational data in a vehicle, in particular a tachograph, with a pulse generator (IG) according to Claim 1 with a sensor head (10) and an evaluation unit, wherein the sensor head (11) comprises a plurality of sensors (11) arranged spatially separate from one another, which detect mechanical rotations and generate a plurality of sensor signals (S1, S2, S3) corresponding to the detected rotations, **characterized in that** the evaluation unit (20) is designed to compare the plurality of generated sensor signals (S1, S2, S3) with a stored signal pattern (SM), and to be able to report a deviation from the stored signal pattern (SM) outside a specifiable tolerance by means of a warning signal.

11. Method for the operation of a pulse generator (IG) according to Claim 1 with a sensor head (10) and an evaluation unit, wherein mechanical rotations are detected by a plurality of sensors (11) arranged spatially separate from one another at the sensor head (11) and a plurality of sensor signals (S1, S2, S3) corresponding to the detected rotations are recorded, **characterized in that** the plurality of generated sensor signals (S1, S2, S3) are compared with a stored signal pattern (SM) and a deviation from the stored signal pattern (SM) outside a specifiable tolerance is reported by a warning signal.

## Revendications

1. Générateur d'impulsions (IG) destiné à un dispositif d'acquisition de données de fonctionnement dans un véhicule, notamment destiné à un tachygraphe ou à un enregistreur de route, comportant une tête de détection (10) et une unité d'évaluation (20), dans lequel la tête de détection (10) comporte plusieurs capteurs (11) disposés de manière spatialement espacée les uns des autres, qui détectent des rotations mécaniques et qui génèrent plusieurs signaux de capteurs (S1, S2, S3) correspondant aux rotations détectées, **caractérisé en ce que** l'unité d'évaluation (20) est conçue pour comparer les multiples signaux de capteurs générés (S1, S2, S3) à un modèle de signal stocké (SM) et pour pouvoir indiquer au moyen d'un signal d'alarme un écart par rapport au modèle de signal stocké (SM) en dehors d'une tolérance pouvant être prédéterminée.

2. Générateur d'impulsions (IG) selon la revendication 1, **caractérisé en ce que** les capteurs sont réalisés sous la forme de capteurs magnétorésistifs, notamment de capteurs GMR, ou sous la forme de capteurs à effet Hall (S1, S2, S3), qui sont disposés à proximité d'un aimant permanent (13) et qui détectent les rotations d'une roue codeuse (R) présentant des zones saillantes, notamment des dents (Z), constituées de matériau ferromagnétique.

3. Générateur d'impulsions (IG) selon la revendication 2, **caractérisé en ce que** les capteurs à effet Hall (S1, S2, S3) et l'unité d'évaluation (20) sont intégrés à une puce, notamment de type ASIC, dans lequel l'aimant permanent est fixé au dos de la puce, notamment sous la forme d'un aimant de polarisation arrière.

4. Générateur d'impulsions (IG) selon la revendication 3, **caractérisé en ce que** la puce est montée sur un substrat (12) par une technique de couches minces ou épaisses.

5. Générateur d'impulsions (IG) selon l'une quelconque des revendications précédentes, **caractérisé en ce que** les capteurs (S1, S2, S3) sont disposés à des distances différentes les unes des autres, et sont notamment disposés sur un substrat (12).

6. Générateur d'impulsions (IG) selon l'une quelconque des revendications précédentes, **caractérisé en ce que** l'unité d'évaluation (20) est conçue pour comparer les uns aux autres les signaux de capteurs (S1, S2, S3) sur la base de propriétés des signaux pouvant être prédéterminées, notamment de l'excursion d'amplitude (A, A'), du décalage temporel ou de phase (T, T') et/ou de la forme du signal.

7. Générateur d'impulsions (IG) selon l'une quelconque des revendications précédentes, **caractérisé en ce que** l'unité d'évaluation (20) est conçue pour acquérir l'un des signaux de capteurs (S1, S2, S3) pendant un intervalle de temps pouvant être prédéterminé, et pour stocker ensuite les signaux de capteurs acquis sous la forme d'un modèle de signal (SM) permettant d'effectuer une comparaison.

8. Générateur d'impulsions (IG) selon l'une quelconque des revendications précédentes, **caractérisé en ce que** l'unité d'évaluation (20) est conçue pour pouvoir indiquer une manipulation du générateur d'impulsions (IG) lorsque la comparaison indique un écart entre les signaux de capteurs (S1, S2, S3) et par rapport au modèle de signal (SM).

9. Générateur d'impulsions (IG) selon l'une quelconque des revendications précédentes, **caractérisé en ce que** les au moins deux, de préférence trois ou plus, capteurs individuels (11) ou plus, sont intégrés sous la forme d'un circuit ASIC et sont directement intégrés à la puce avec l'unité d'évaluation (20).

10. Dispositif d'acquisition de données de fonctionnement dans un véhicule, notamment un tachygraphe ou un enregistreur de route, comportant un générateur d'impulsions (IG) selon la revendication 1, muni d'une tête de capteur (10) et d'une unité d'évaluation, dans lequel la tête de capteur (11) comporte plusieurs capteurs (11) disposés de manière spatialement espacée les uns des autres, qui détectent des rotations mécaniques et génèrent des signaux de capteurs (S1, S2, S3) correspondant aux rotations détectées, **caractérisé en ce que** l'unité d'évaluation (20) est conçue pour comparer les multiples signaux de capteurs générés (S1, S2, S3) à un modèle de signal stocké (SM) et pour pouvoir indiquer au moyen d'un signal d'alarme un écart par rapport au modèle de signal stocké (SM) en dehors d'une tolérance pouvant être prédéterminée.

11. Procédé de mise en fonctionnement d'un générateur d'impulsions (IG) selon la revendication 1, comportant une tête de capteur (10) et une unité d'évaluation, dans lequel des rotations mécaniques sont détectées par de multiples capteurs (11) disposés de manière spatialement espacée les uns des autres sur la tête de capteur (11) et de multiples signaux de capteurs (S1, S2, S3) correspondant aux rotations détectées sont acquis, **caractérisé en ce que** les multiples signaux de capteurs générés (S1, S2, S3) sont comparés à un modèle de signal stocké (SM) et un écart par rapport au modèle de signal stocké (SM) en dehors d'une tolérance pouvant être prédéterminée est indiqué par l'intermédiaire d'un signal d'alarme.
